# EUROPÄISCHE PATENTANMELDUNG

(11) **EP 3 621 184 A1**
(43) Veröffentlichungstag der Anmeldung: **11.03.2020**
(21) Anmeldenummer: 18192344.2
(22) Anmeldetag: 04.09.2018
(51) Int. Cl.: H02K 7/20, H02K 3/04, H02K 3/50, H02K 7/116, H02K 15/12, H02K 16/00, H02K 19/10, H02K 19/36, H02K 55/04

(54) **EINZELKRAFTWERK**

(71) Anmelder: Kuhushov, Oleksandr, 86115 Makiivka (UA)
(72) Erfinder: Kuhushov, Oleksandr, 86115 Makiivka (UA)
(74) Vertreter: Jeck, Anton

(57) **Zusammenfassung**

Einzelkraftwerk mit einem Generator (G), einem ersten Treiber (V1), einem Synchronmotor (M), einem zweiten Treiber (V2), einem Reduzierantrieb (R) und einem elektronischen Lenksystem (ESU), wobei die Statoren des Generators (G) und der Treiber (V1,V2) jeweils mit einem, Stäbe, Ringe und Spulen aufweisenden, Käfig ausgestattet sind, deren Anzahl proportional zur Anzahl der Pole gewählt ist.

## Beschreibung

Die Erfindung betrifft ein Einzelkraftwerk aus dem Bereich der Energetik gemäß dem Oberbegriff des Anspruchs 1.

Bei den üblichen Einzelkraftwerken entstehen hohe Leistungsverluste durch relativ geringe Wirkungsgrade der Einzelkomponenten, so dass die zur Verfügung stehenden Ressourcen nur ungenügend nutzbar gemacht werden können.

Die Druckschrift UA 28807 U beschreibt einen Generator mit Zusatzelektromagneten, die für die Reduktion des magnetischen Widerstands des Stators des Generators bestimmt sind. Die Magnete sind zwischen festen Spulen des Stators in Reihe geschaltet und zwar so, dass die Magnetfelder mit den gleichnamigen Polen zueinander gerichtet sind. Ein Treiber versorgt die Rotorspulen mit Energie. Weiterhin ist ein achsrecht gekoppelter Magnetmotor mit zwei Treibern an den Permanentmagneten angeordnet für die Energieversorgung der Wicklungen des Stators und Rotors. Da die Kopplung des Generators mit dem Motor ohne entsprechendes Getriebe erfolgt, treten hohe Leistungsverluste auf.

In der Druckschrift UA 28873 U ist ein Synchronmotor beschrieben, der einen Treiber an den Permanentmagneten für den Rotor enthält. Nachteilig erscheint dabei, dass die Spannungszunahme durch die Permanentmagnete zu gering ist.

Eine Fertigung von Spulen wird in der Druckschrift UA 67406 U beschrieben. Dabei wird ein Kupfer-Nickel-Supraleiter verwendet, mit 99,99% reinem, Kupfer, wobei die Nickel-Schicht eine Reinheit von 99,9999% und eine Dicke von 1 bis 3 µm aufweist, abhängig von der Drahtgröße. Der Leiter wird im Vakuumofen bei einer Temperatur von 950° C innerhalb von 2 bis 3 Stunden erhitzt, bis zur idealen Diffusion der Kupfer- und Nickelatome auf dem Kupferdraht. Danach erfolgt eine Abkühlung innerhalb von 1 bis 2 Stunden im geschlossenen Ofen. Anschließend werden die Spulen in entgegengesetzter Richtung aufgespult und im Ofen für eine Stunde einer Temperatur von 900° C ausgesetzt. Die fertigen Spulen werden mit Isolierlack überzogen. Der Herstellungsprozess gestaltet sich dabei langwierig und ineffizient.

Der Erfindung liegt daher die Aufgabe zugrunde den magnetischen Widerstand des Generators sowie die Geräuschentwicklung und die Anlaufzeit des Motors zu reduzieren und dessen Drehmoment bei hohen Drehzahlen zu erhöhen.
Diese Aufgabe wird durch die Merkmale des Anspruchs 1 gelöst. Die über einen Zeitraum von zehn Jahren durchgeführten Versuche haben gezeigt, dass bei einer Anordnung von Elektromagneten (Spulen) innerhalb eines Generatorstators, der die Form eines Käfigs aufweist, wobei der Flankenabstand der Spulen, die mit gleichnamigen Polen zueinander gerichtet sind, 80% des Durchmessers des Zentralkerns beträgt, die Leistungsfähigkeit des Magnetfelds um 50% steigt. Dabei ist der magnetische Widerstand um ein Vielfaches geringer, wodurch keine zusätzliche elektrische Leistung für den Erhalt des Magnetfeldes nötig ist. Somit ist die notwendige Kraft zum Antreiben dieses Generators um ein Vielfaches geringer als bei konventionellen Generatoren.

Die effektivste Konstruktion des Generators besteht dabei aus drei Sektionen mit den Phasen A, B und C, wobei die Phasenspulen sterngeschaltet und mit den Spulen des Stators stufenweise verbunden sind, so dass deren Magnetfelder mit ihren gleichnamigen Polen zueinander gerichtet sind und mit den gleichnamigen Polen der Phasenspulen zusammenfallen. Infolgedessen verschwindet das Magnetfeld des Stators völlig. Die elektrischen Felder der Phasenspulen bleiben erhalten. Außerdem wird kein Statorspulenstrom erzeugt, weil seine Windungen longitudinal zum Magnetfeld des Rotors angeordnet sind.

Für den Antrieb des Generators ist ein Synchronmotor mit einem Treiber vorgesehen, der einen entsprechenden Stator in Form eines Käfigs aufweist. Die Spulen des Motors sind sterngeschaltet und an den Generator durch ein elektronisches Lenksystem angeschlossen. Vom Generator wird das Drehmagnetfeld zum Stator des Motors ohne Leistungsverlust übertragen und tritt in Wechselwirkung mit dem Magnetfeld des Rotors. Somit wird bei der Arbeit im Leerlauf und / oder wenn die Last geringer als 50% des Generatorpotentials beträgt, eine Phasenverschiebung zwischen dem Strom und der Spannung in den Motorspulen in Höhe von 90 - 45° erreicht. Daher beträgt der Leistungsverbrauch des Motors bei 90° 0,00 Watt und bei 45° immer noch 50% weniger als bei konventionellen Motoren. Der Strom, der durch die Rotorspulen des Generators fließt kommt von der Spule des Synchronmotortreibers und wird über das elektronische Lenksystem übertragen. Die Generatordrehzahl und die Motordrehzahl bestimmen die Frequenz des Stroms, sowie die Polzahl und die Getriebeübersetzungszahl. Für die Erhaltung der Phasenverschiebung im Lastzustand ist das Widerstandsverhältnis zwischen der Stromquelle und der Last, sowohl der externen Last als auch der internen Last, maßgebend.

Die Stromquellenspulen des Generators sind aus einem Kupferdraht und die Lastspulen des Motors aus einem supraleitenden Kupfer-Nickel-Draht hergestellt. Dadurch sinkt der Widerstand und damit die Energieverluste in den Motorspulen und die Energieerzeugung des Generators wird maximiert. Wegen des Mangels an Wirbelströmen entstehen außerdem keine Geräusche (Brummen) und der Motor erwärmt sich nicht.

Als Verbindungsanordnung zwischen dem Motor und dem Generator wird ein Reduzierantrieb mit entsprechenden Zahnraddurchmessern relativ zu den Rotordurchmessern des Generators und des Motors verwendet, wobei das Drehzahlverhältnis 6 beträgt.

Die Erfindung wird nun anhand eines Ausführungsbeispiels näher erläutert. Es zeigen:
- Fig. 1: ein Grundschaltbild,
- Fig. 2: einen Generatorquerschnitt A-A und Treiberquerschnitt C-C,
- Fig. 3: einen Treiberquerschnitt D-D,
- Fig. 4: einen Generatorquerschnitt B-B,
- Fig. 5: einen Motorquerschnitt B-B und Treiberquerschnitt D-D,
- Fig. 6: einen Treiberquerschnitt A-A und
- Fig. 7: einen Motorquerschnitt C-C.

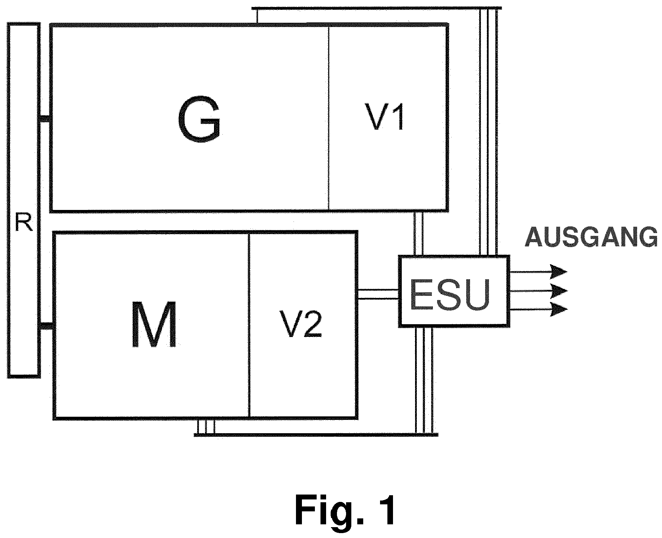

Das Einzelkraftwerk (Fig. 1) umfasst einen Generator G, einen ersten Treiber V1, einen Synchronmotor M, einen zweiten Treiber V2, einen Reduzierantrieb R und ein elektronisches Lenksystem ESU.

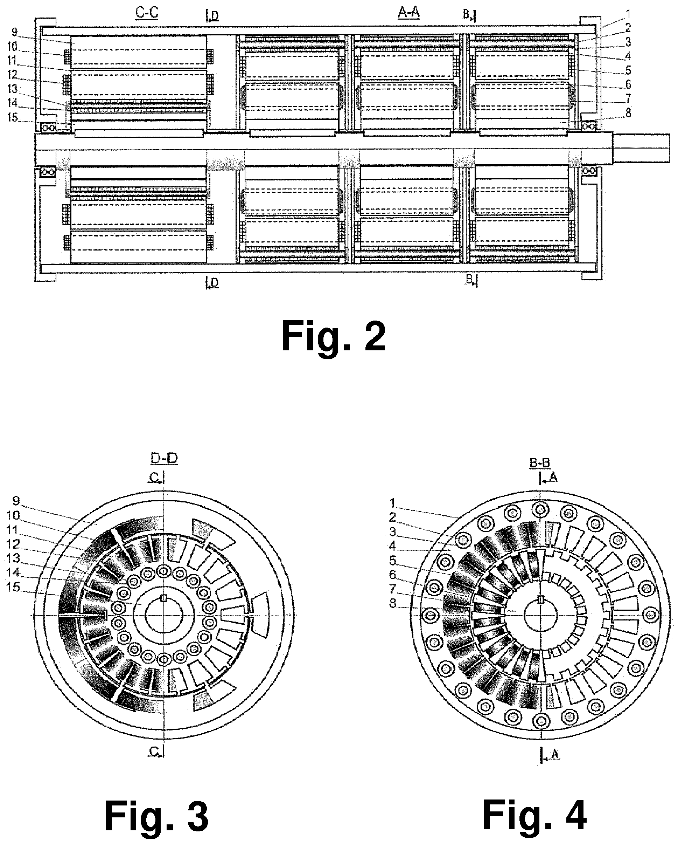

Der 24-polige 3-Phasengenerator (Fig. 2, 3 und 4) besteht aus einem ersten Gehäuse 1, einem ersten Käfig 2 mit ersten Spulen 3 eines ersten Stators 4 und mit dessen zweiten Spulen 5, einem ersten Rotor 6 mit dritten Spulen 7 und einer erstem Buchse (Nabe) 8 aus unmagnetischem Stoff, einem Stator 9 des ersten Treibers V1 mit vierten Spulen 10, einem zweiten Rotor 11 mit fünften Spulen 12 und einem zweiten Käfig 13 mit sechsten Spulen 14 sowie einer zweiten Buchse (Nabe) 15 aus unmagnetischem Stoff. Alle Spulen sind stufenweise geschaltet und zwar so, dass die Magnetfelder mit den gleichnamigen Polen zueinander gerichtet sind.

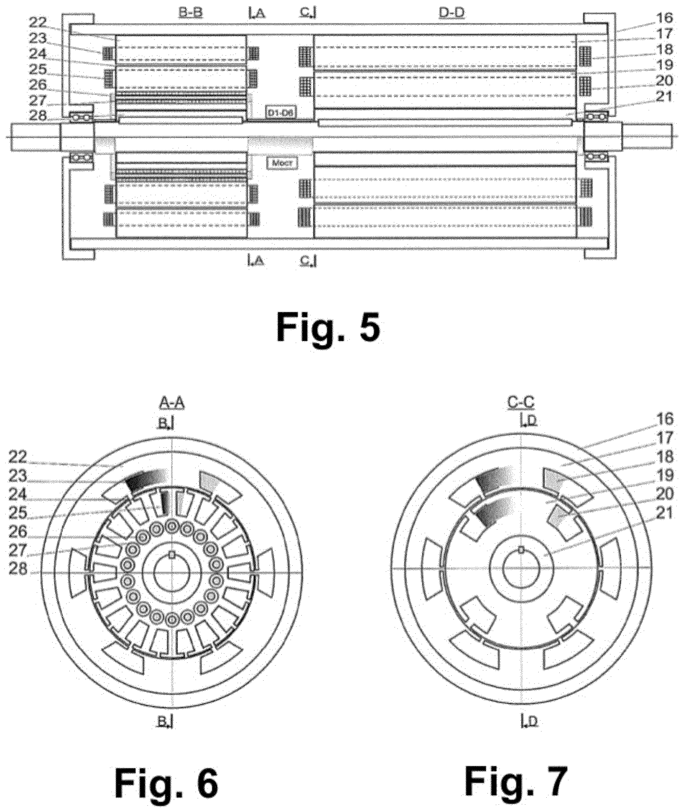

Der 6-polige 3-Phasenmotor (Fig. 5, 6 und 7) besteht aus einem zweiten Gehäuse 16, einem zweiten Stator 17 mit siebenten Spulen 18, einem dritten Rotor 19 mit achten Spulen 20 und einer dritten Buchse (Nabe) 21 aus unmagnetischem Stoff, einem Stator 22 des zweiten Treibers V2 mit neunten Spulen 23, einem vierten Rotor 24 mit zehnten Spulen 25 und einem dritten Käfig 26 mit elften Spulen 27 sowie einer vierten Buchse (Nabe) 28 aus unmagnetischem Stoff. Dabei sind alle Spulen stufenweise geschaltet und zwar so, dass die Magnetfelder mit den gleichnamigen Polen zueinander gerichtet sind.

Dabei sind die dritten, vierten, achten und neunten Spulen 7, 10, 20, 23 aus Kombinationsdraht gefertigt, der nach einem Diffusionsverfahren aus verschiedenen Metallen hergestellt ist, und zwar aus Kupfer mit einer Reinheit von 99,99% und aus Nickel mit einer Reinheit von 99,9999%, wobei das Kupfer durch Vakuumabscheidung im Vakuumofen bei einer Temperatur von 950° C innerhalb 2 bis 3 Stunden mit Nickel mit einer Dicke von 1 bis 3 µm überzogen, anschließend innerhalb von 1 Stunde im geschlossenen Ofen abgekühlt und dann mit Isolierlack überzogen wird. Dieses Verfahren verwendet gegenüber dem Stand-der-Technik weniger Prozessschritte und ist somit deutlich effizienter.

Während des Betriebs des Einzelkraftwerks geschieht das Folgende: Bei der Annäherung des Nordpols des Generatorrotors 6 an die Phasenwicklung 2, 3, 5 wird in dieser ein Gleichstrom erzeugt, der den Kern magnetisiert. Der Nordpol der Phasenwicklung 2, 3, 5 befindet sich am inneren Rand der Spule 5 gegenüber dem Nordpol des Rotors 6 an dessen äußeren Rand der Spule 7, während die Südpole an entgegengesetzten Positionen angeordnet sind. Infolgedessen verschwindet der magnetische Widerstand in der Mitte des Kerns und entlang des gesamten Kreisumfangs des Stators 4. Das elektrische Feld der Spule bleibt erhalten. Daher erhöht sich die Induktion nach der Spannungskonstanten über 2,5 V/m des Spulendrahts, und die notwendige Kraft zum Antreiben des Generators nimmt um ein Vielfaches ab. Wird die Motorleistung gesteigert, erhöht das elektronische Lenksystem ESU die Leistung des Magnetfelds des Generatortreibers V1. Die Ausgangsspannung bleibt erhalten.

Durch die räumliche Anordnung von Generator und Motor wird ein Drehmagnetfeld des Generators zum Motor übertragen. Dieses Feld tritt in Wechselwirkung mit dem Rotorfeld, und der Rotor 19 dreht sich synchron relativ zur Frequenz des Stroms. Zum Beispiel kommt ein Strom mit der Frequenz von 100 Hz zum Motor. Der Rotor 19 dreht sich mit einer Drehzahl (mit der Geschwindigkeit) von 3000 U/min. Die Getriebeübersetzungszahl ist 6. Dementsprechend rotiert der Rotor 6 des Generators mit 500 U/min. Der Generator erzeugt einen Strom mit der Frequenz von 100 Hz. Erhöht sich die Motorleistung, erhöht das elektronische Lenksystem ESU die Leistung des Magnetfelds der Spule des Motortreibers V2 entsprechend zur Erhaltung der Spannungshöhe des Generators und des proportionalen Anstiegs der Drehmomenterhöhung des Motors. In diesem Fall erhöht sich der magnetische Widerstand nicht. Somit funktioniert das Kraftwerk aufgrund des mangelnden Widerstands. Gibt es keinen Widerstand, ist keine elektrische Leistung zu seiner Überwindung nötig. Wegen der Synchronisation der Magnetfelder der beiden Treiber V1, V2 erhöht sich die Spannung am Motor, und die Generatorspannung wird größer. Dies ist der Grund für die Verringerung des Motorstromverbrauchs im Lastzustand.

## Patentansprüche

1. Einzelkraftwerk mit einem Generator (G), einem ersten Treiber (V1), einem Synchronmotor (M), einem zweiten Treiber (V2), einem Reduzierantrieb (R) und einem elektronischen Lenksystem (ESU),
**dadurch gekennzeichnet,**
**dass** die Statoren des Generators (G) und der Treiber (V1, V2) jeweils mit einem, Stäbe, Ringe und Spulen aufweisenden, Käfig (2, 13, 26) ausgestattet sind, deren Anzahl proportional zur Anzahl der Pole gewählt ist.

2. Einzelkraftwerk nach Anspruch 1,
**dadurch gekennzeichnet,**
**dass** der Generator (G) aus Folgendem besteht: einem ersten Gehäuse (1), einem ersten Käfig (2) mit ersten Spulen (3) eines ersten Stators (4) und mit dessen zweiten Spulen (5), einem ersten Rotor (6) mit dritten Spulen (7) und einer erstem Buchse (8) aus unmagnetischem Stoff, einem Stator (9) des ersten Treibers (V1) mit vierten Spulen (10), einem zweiten Rotor (11) mit fünften Spulen (12) und einem zweiten Käfig (13) mit sechsten Spulen (14) sowie einer zweiten Buchse (15) aus unmagnetischem Stoff, wobei alle Spulen stufenweise geschaltet sind und zwar so, dass die Magnetfelder mit den gleichnamigen Polen zueinander gerichtet sind.

3. Einzelkraftwerk nach Anspruch 1,
**dadurch gekennzeichnet,**
**dass** der Motor (M) aus Folgendem besteht: einem zweiten Gehäuse (16), einem zweiten Stator (17) mit siebenten Spulen (18), einem dritten Rotor (19) mit achten Spulen (20) und einer dritten Buchse (21) aus unmagnetischem Stoff, einem Stator (22) des zweiten Treibers (V2) mit neunten Spulen (23), einem vierten Rotor (24) mit zehnten Spulen (25) und einem dritten Käfig (26) mit elften Spulen (27) sowie einer vierten Buchse (28) aus unmagnetischem Stoff, wobei alle Spulen stufenweise geschaltet sind und zwar so, dass die Magnetfelder mit den gleichnamigen Polen zueinander gerichtet sind.

4. Einzelkraftwerk nach Anspruch 2 und 3,
**dadurch gekennzeichnet,**
**dass** die dritten, vierten, achten und neunten Spulen (7, 10, 20, 23) aus Kombinationsdraht gefertigt sind, der nach einem Diffusionsverfahren aus verschiedenen Metallen hergestellt ist, und zwar aus Kupfer mit einer Reinheit von 99,99% und aus Nickel mit einer Reinheit von 99,9999%, wobei das Kupfer durch Vakuumabscheidung im Vakuumofen bei einer Temperatur von 950° C innerhalb 2 bis 3 Stunden mit Nickel mit einer Dicke von 1 bis 3 µm überzogen, anschließend innerhalb von 1 Stunde im geschlossenen Ofen abgekühlt und dann mit Isolierlack überzogen wird.
